# EUROPEAN PATENT SPECIFICATION

(11) **EP 0 504 732 B1**
(45) Date of publication and mention of the grant of the patent: **19.06.1996**
(21) Application number: 92104226.3
(22) Date of filing: 11.03.1992
(51) Int. Cl.: C09D 163/00, C09D 133/00, C09D 167/00, C08G 59/68, C08G 59/18

(54) **Powder coating composition**
Pulverbeschichtungszusammensetzung
Composition de revêtement sous forme de poudre

(30) Priority: 18.03.1991 JP 52772/91
(43) Date of publication of application: 23.09.1992
(73) Proprietor: Nippon Paint Co., Ltd., Kita-ku, Osaka-shi, Osaka 531 (JP)
(72) Inventor: Toyoda, Yuji, Takatsuki-shi, Osaka 569 (JP); Uenaka, Akimitsu, Suita-shi, Osaka 565 (JP); Ueno, Tasaburo, Sakai-shi, Osaka 588 (JP); Ichimura, Hideki, Suita-shi, Osaka 565 (JP); Tsutsui, Koichi, Tanabe-cho, Tsuzuki-gun, Kyoto 610-03 (JP)
(74) Representative: Henkel, Feiler, Hänzel & Partner

(56) References cited:
- EP-A- 0 304 503
- GB-A- 2 206 584
- DATABASE WPIL Derwent Publications Ltd., London, GB; AN 88-067039

## Description

### BACKGROUND OF THE INVENTION

The present invention relates to a powder coating composition.

The acid and epoxy curing type powder coating compositions have been hitherto used as the preferred powder coating composition. This is because use of such powder coating composition produces uniformity of coating film easily and yellowing of the coating film is minimal. However, a problem found with the powder coating composition is that it has a poor curing property. Therefore, there is a case where a catalyst is added to the powder coating composition as a means to elevate the curing property. However, since the storing stability decreases with addition of the catalyst, there is a limitation to the amount of the catalyst that can be added. In addition, the catalyst addition can not be added to a highly reactive system such as that of a carboxylic acid type polyester resin and polyfunctional epoxy compound-based powder coating composition, and the like.

Meanwhile, in the field of one-solution type epoxy resin coatings, a curing agent reported to have superior curing property and storing stability is the undermentioned master batch type curing agent (refer to Japanese Official Patent Provisional Publication, 64-70523). This is a master batch type curing agent made by capsuling a powder type amine compound as a core with a compound or resin capable of reacting with this amine compound as a capsule. This curing agent can be also used in combination with other curing agents, for example, guanidines, acid hydrazides, aromatic amines, acid anhydrides, and the like.

EP-A-0 304 503 discloses a master batch of hardener for curable one-package epoxy resin system which comprises (I) a hardener consisting of
(I) a hardener consisting of
   (i) a powder of an amine compound (A) as a core having at least one tertiary amino group in the molecule while having no primary and secondary amino groups, the powder having both a group (X) capable of absorbing infrared rays of 1630 to 1680 cm⁻¹ in wave length and a group (Y) capable of absorbing infrared rays of 1680 to 1725 cm⁻¹ in wave length at least on the surface of the powder, and
   (ii) a reaction product of the amine compound (A) and an epoxy resin as a shell; and
(II) an epoxy resin (B) in a ratio of 10 to 50,000 parts by weight to 100 parts by weight of the hardener (I). A hardener containing the master batch is also disclosed.

However, in a powder coating composition that uses a master batch type curing agent, a problem arises because the resin and curing agent in the powder coating particles. The resin and curing agent have a sea-island structure which causes the formed coating film to become non-uniform and consequently inferior in its outside appearance and physical properties.

In a case where the forementioned guanidines, acid hydrazides, aromatic amines, and acid anhydrides are used in combination with the master batch type curing agent, a problem of the forementioned non-uniform structure is solved. However, a system using the guanizines, acid hydrazides, and aromatic amines in combination is difficult in low temperature curing. In addition, high temperature baking causes substantial yellowing and the baking temperature range is narrow. Finally, in a system which uses the acid anhydrides in combination, because the powder coating particles are in contact with air, the acid anhydrides form free acids by absorbing moisture from air at high humidity. Because the reaction rate of these free acids with an epoxy group differs from the reaction rate of the acid anhydrides with the epoxy group, there is a resulting degradation of outside appearance rendering the system unsuitable for practical use.

### OBJECTS AND SUMMARY OF THE INVENTION

Accordingly, it is an object of the present invention to provide a powder coating composition with which curing at a low temperature is possible and which has superior curing property and storing stability and is also capable of forming a coating film with an excellent outside appearance.

To achieve this object, a powder coating composition relating to the present invention comprises
A) a compound or resin containing two or more carboxyl groups in one molecule
B) a compound or resin with two or more glycidyl groups in one molecule wherein the functional group-equivalent ratio of glycidyl to carboxyl groups is in a range of from 0.5 to 2.0 and
C) a curing catalyst in the form of a complex α and/or β
   **wherein**
   the curing catalyst is obtained
   1) by melting and mixing 10 parts by weight of a tertiary amine compound prepared by reacting a secondary amine with an epoxy resin and/or compound with 10 to 200 parts by weight of a resin having a softening point in the range of from 70 to 180°C selected from the group of polyesters and acrylic resins
      and then by cooling the mixture followed by crushing the cooled mixture so as to have an average particle diameter in the range of from 1 to 30 µm and a softening point within a temperature range of from 60 to 180°c (complex α) or
   2) by encapsulating a core consisting of a powder of a tertiary amine compound prepared by reacting a secondary amine with an epoxy resin and/or compound with an encapsulating material being the reaction product between said tertiary amine compound and an epoxy resin and/or compound and an isocyanate compound (complex β)
      and
      **wherein**
      the ratio of said tertiary amine compound in said curing catalyst to the total weight of components A) and B) is from 0.05 to 3.0 % by weight.

Hereinafter, the present invention is explained in detail using the most popularly used polyester-based powder coating composition and acrylic-based powder coating composition as examples.

### - Polyester-based powder coating composition -

One example of the polyester-based powder coating composition in the present invention is a powder coating composition comprising a polyester resin containing two or more of a carboxyl group in one molecule and an epoxy compound or resin having two or more of a glycidyl group in one molecule. That is, in this polyester-based powder coating composition, the carboxyl group-containing polyester resin is used as a base resin, and the epoxy compound or resin having two or more of the glycidyl group in one molecule is used as a curing agent.

The carboxyl group-containing polyester resin used as a base resin is not specifically limited, but its number average molecular weight should be in a range of from 1,000 to 10,000 and preferably in a range of from 1,500 to 8,000. Its acid value should be in a range of from 5 to 100 (KOH mg/g) and preferably in a range of from 20 to 80 (KOH mg/g). Its glass transition temperature should be in a range of from 20 to 100°C and preferably in a range of from 30 to 80 °C . If the number average molecular weight is less than 1,000, the film strength is deficient, if the number average molecular weight exceeds 10,000, the flowing property of the coating film is degraded and the outside appearance of a coating film is barely presentable. If the acid value is less than 5, the film strength is degraded, if the acid value exceeds 100, the hardening step is overdone causing the film performance, such as flexibility, shocking resistance, etc. of the coating film to decrease. Also, if the glass transition temperature is less than 20°C , the blocking resistance drops dramatically; if it exceeds 100 °C , the flowing property of the coating film is degraded.

The carboxyl group-containing polyester resin used in the present invention which satisfies the above requirements may be comprising a polyester resin for coating which is obtainable by using a known acid material and a known alcohol material as well as a conventional method.

In this case, preferable acid materials are, for example, terephthalic acid, isophthalic acid, phthalic acid, methylphthalic acid, trimellitic acid, pyromellitic acid, adipic acid, sebacic acid, succinic acid, maleic acid, fumaric acid, tetrahydrophthalic acid, methy ltetrahydrophthalic acid, hexahydrophthalic acid, and the acids represented by the following formula (1) or (2), as well as reactive derivatives of these compounds such as acid anhydrides, acid halides, acid esters, and the like.

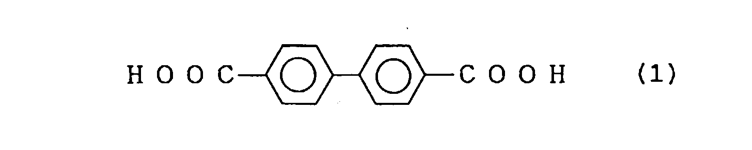

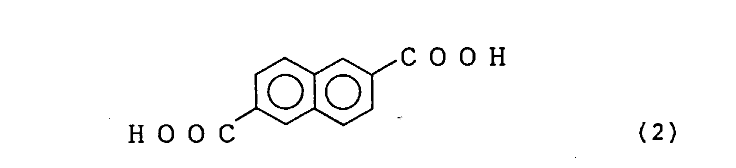

Useful alcohol materials are, for example, ethylene glycol, propylene glycol, 1,3-butanediol, 1,4-butanediol, 1, 6-hexanediol, diethylene glycol, dipropylene glycol, 1,4-cyclohexanedimethanol, 1,4-cyclohexanediol, compounds represented by the following formula (3), (4), or (5), neopentyl glycol, isopentyl glycol, bis(hydroxyethyl) terephthalate, hydrogenated bisphenol A, addition compounds of this hydrogenated bisphenol A with an alkylene oxide, trimethylolethane, trimethylolpropane, glycerol, pentaerythritol, and the like.

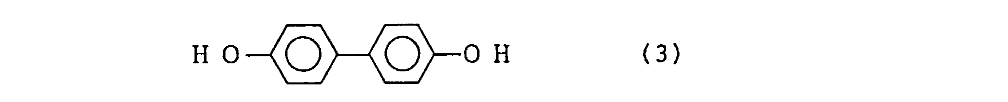

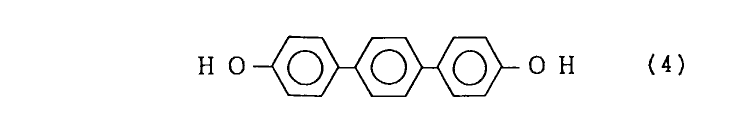

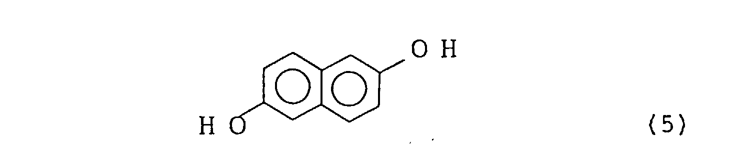

In addition, if necessary, a reactive polyfunctional compound, oils and fats or a fatty acid, etc., may be jointly used as materials of the polyester resin. A preferable reactive polyfunctional compound is a compound having an acidic group and a hydroxyl group in an identical molecule such as hydroxypivalic acid, hydroxybenzoic acid, or the like. The oils and fats can be introduced by an ester-exchange reaction, or the like, and the fatty acid by a dehydration reaction, or the like.

The reactions can be performed by a well-known one-step or a multi-step reaction. As well known, the glass transition temperature value is controlled by choosing the kind and amount of reaction material and the number average molecular weight and acid value are controlled by choosing reaction conditions.

Practical examples of an epoxy compound or resin having two or more of a glycidyl group in one molecule for use as a curing agent are not specifically limited. They are, for example, a reaction product of a phenolic compound such as bisphenol A, phenol novolac, and the like with epichlorohydrine; a reaction product of a cresolic compound such as cresol novolac or the like with epichlorohydrine; a glycidyl ether obtained from a reaction of an alcoholic compound such as ethylene glycol, propylene glycol, 1,4-butanediol, polyethylene glycol, polypropylene glycol, neopentyl glycol, and glycerol, or the like with epichlorohydrine; a glycidyl ester obtained from a reaction of a carboxylic acid such as succinic acid, adipic acid, sebacic acid, phthalic acid, terephthalic acid, hexahydrophthalic acid, trimellitic acid, or the like with epichlorohydrine; a reaction product of a hydroxycarboxylic acid such as p-hydroxybenzoic acid, β-hydroxynaphthoic acid, or the like with epichlorohydrine; an alicyclic epoxy compound such as 3,4-epoxy-6-methylcyclohexylmethyl 3,4-epoxy-6-methylcyclohexanecarboxylate and 3,4-epoxycyclohexylmethyl 3,4-epoxycyclohexanecarboxylate, or the like; triglycidyl isocyanurate (TGIC) and its derivatives; or a polyglycidyl compound X having a glycidyl group of, on average, from two to six in one molecule obtained by adding triglycidyl isocyanurate to a polyester oligomer having two or more of a carboxyl group in one molecule; and the like.

Although the carboxyl group-containing polyester oligomer used to obtain the polyglycidyl compound X can be obtained by using a material and a method for producing the forementioned carboxyl group-containing polyester resin, the preferable number average molecular weight of the carboxyl group-containing polyester oligomer is in a range of from 200 to 1,200. The number average molecular weight of 200 corresponds to almost the minimum molecular weight of a carboxyl group-containing polyester and, if the number average molecular weight exceeds 1,200, the flowing character of a coating film is deficient, whereby a coating film is obtained having an outside appearance that is barely presentable. In addition, in producing the polyglycidyl compound X, at least one of a glycidyl compound and its derivative (which have two or more of a glycidyl group in one molecule) represented by the following formula (6) (in the formula, each of R¹, R², and R³ independently denotes a hydrogen atom or a methyl group.) may be used instead of triglycidyl isocyanurate.

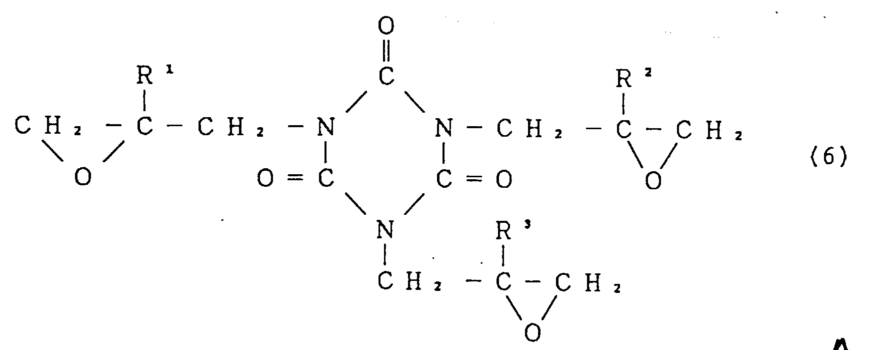

The carboxyl group-containing polyester resin A used as a base resin and an epoxy compound or epoxy resin B used as a curing agent are combined in such a manner to be from 0.5 to 2.0 in a functional group-equivalent ratio of the glycidyl group in the epoxy compound or resin B to the carboxyl group in the polyester resin A or more preferably, to be 0.5 to 1.5. In a compound formed where the functional group-equivalent ratio is less than 0.5, the curing degree of a coating film is too low; if it exceeds 2.0, the curing proceeds too quickly and the coating film performance such as flexibility, shocking resistance, and the like, decreases, so that both cases are not favored.

### - Acrylic-based powder coating composition -

A representative example of the acrylic-based powder coating composition is a powder coating composition comprising an acrylic resin containing two or more of a carboxyl group in one molecule and an epoxy compound or resin having two or more of a glycidyl group in one molecule. Another example is a powder coating composition comprising an acrylic resin having two or more of a glycidyl group in one molecule and a compound or resin having two or more of a carboxyl group in one molecule. That is, the acrylic-based powder coating composition in the first example uses a carboxyl group-containing polyester resin as a base resin and an epoxy compound or resin having two or more of a glycidyl group in one molecule as a curing agent. The acrylic-based powder coating composition in the second example uses an acrylic resin having two or more of a glycidyl group in one molecule as a base resin and a compound or resin having two or more of a carboxyl group in one molecule as a curing agent.

The acrylic resin containing a carboxyl group or the acrylic resin containing a glycidyl group, both of which are used as a base resin, is not specifically limited, but a preferable number average molecular weight is in a range of from 1,000 to 30,000 and more preferably, from 1,500 to 8,000. Also, a glass transition temperature is in a range of from 20 to 120°C is preferred and more preferably, from 30 to 80°C . Further, in the carboxyl group-containing acrylic resin, although not specifically limited, a preferable acid value isin a range of from 5 to 200 (KOH mg/g) and more preferably, from 20 to 100 (KOH mg/g). In addition, although not specifically limited, in the glycidyl group-containing acrylic resin, it is preferred that a glycidyl group-containing monomer is contained in a range of from 20 to 50 % by weight in the ethylene-based unsaturated monomer. This is because the number average molecular weight less than 1,000 decreases the film strength; if it exceeds 30,000, the flowing character of a coating film is deficient and a coating film is obtained having an outside appearance is barely presentable. If the glass transition temperature of the base resin is less than 20°C , the blocking resistance is very degraded, and if it exceeds 120 °C , the flowing character of a coating film is degraded. If the acid value is less than 5, or if the glycidyl group-containing monomer is less than 20 % by weight, the film strength is degraded, while if the acid value exceeds 200, or if the glycidyl group-containing monomer exceeds 50 % by weight, the curing proceeds too quick and the film performance, such as flexibility, shocking resistance, and the like decreases.

The acrylic resin which is used as a base resin in the present invention which satisfies the above-described requirements can be obtained by using conventional materials and methods. Preferable examples of a monomer to supply a carboxyl group are acrylic acid, methacrylic acid, or the like. Preferable examples of a monomer to supply a glycidyl group are (methyl) glycidyl esters of (meth)acrylic acid, (methyl) glycidyl ethers of (meth)allyl alcohol, N-glycidylacrylamide, glycidyl vinylsulfonate, or the like. These compounds are used alone or in combination of a plural kind. In addition, a monomer capable of copolymerizing with the carboxyl group-containing monomer or glycidyl group-containing monomer may be also used as a material. Preferable examples of the monomer capable of copolymerizing with the above monomers are an acrylic acid ester, a methacrylic acid ester, and other ethylene-based unsaturated monomers. Preferable examples of the acrylic acid esters or methacrylic acid esters are, for example, methyl acrylate, ethyl acrylate, n-propyl acrylate, isopropyl acrylate, n-butyl acrylate, isobutyl acrylate, tert-butyl acrylate, cyclohexyl acrylate, 2-ethylhexyl acrylate, octyl acrylate, 2-ethyloctyl acrylate, dodecyl acrylate, benzyl acrylate, methyl methacrylate, ethyl methacrylate, n-propyl methacrylate, isopropyl methacrylate, n-butyl methacrylate, isobutyl methacrylate, tert-butyl methacrylate, hexyl methacrylate, cyclohexyl methacrylate, 2-ethylhexyl methacrylate, octyl methacrylate, 2-ethyloctyl methacrylate, dodecyl methacrylate, lauryl methacrylate, benzyl methacrylate, phenyl methacrylate, 2-hydroxyethyl acrylate, 2-hydroxyethyl methacrylate, 2-hydroxypropyl acrylate, 2-hydroxypropyl methacrylate, or the like. Also, preferable examples of other ethylene-based unsaturated monomers are, for example, fumaric acid dialkyl esters such as diethyl fumarate, dibutyl fumarate, or the like; itaconic acid dialkyl esters such as diethyl itaconate, dibutyl itaconate, or the like; styrene, vinyltoluene, α -methylstyrene, acrylonitrile, methacrylonitrile, acrylamide, methacrylamide, methylolacryloamide, alkoxymethylolamide, vinyloxazoline, vinyl acetate, vinyl propionate, lauryl vinyl ether, or the like.

Preferable examples of the compound or resin having two or more of a carboxyl group in one molecule used as a curing agent are dibasic acids such as glutar acid, adipic acid, pimelic acid, suberic acid, azelaic acid, sebacic acid, 1,12-dodecanedioic acid, 1,20-eicosanedioic acid, citric acid, maleic acid, citraconic acid, itaconic acid, glutaconic acid, phthalic acid, isophthalic acid, hexahydrophthalic acid, and the like; and polyvalent carboxylic acids such as trimellitic acid, and the like. This compound or resin may be a polyester resin, and the like having two or more of a carboxyl group in one molecule.

Preferable examples of the epoxy compound or resin having two or more of a glycidyl group in one molecule used as a curing agent are a reaction product of a phenolic compound such as bisphenol A, phenol novolac, or the like with epichlorohydrine, a reaction product of a cresolic compound such as cresol novolac or the like with epichlorohydrine; a glycidyl ether obtained from a reaction of an alcoholic compound such as ethylene glycol, propylene glycol, 1,4-butanediol, polyethylene glycol, polypropylene glycol, neopentyl glycol, glycerol, or the like with epichlorohydrine; a glycidyl ester obtained from a reaction of a carboxylic acid compound such as succinic acid, adipic acid, sebacic acid, phthalic acid, terephthalic acid, hexahydrophthalic acid, trimellitic acid, or the like with epichlorohydrine; a reaction product of a hydroxycarboxylic acid such as p-hydroxybenzoic acid, β-hydroxynaphtoic acid, or the like with epichlorohydrine; an alicyclic epoxy compound such as 3,4-epoxy-6-methylcyclohexylmethyl 3,4-epoxy-6-methylcyclohexanecarboxylate and 3,4-epoxycyclohexylmethyl 3,4- epoxycyclohexanecarboxylate, or the like; triglycidyl isocyanurate (TGIC) and its derivatives; or the forementioned polyglycidyl compound X; or the like.

In the present invention, the first material A composed of a compound or resin having two or more of a carboxyl group in one molecule and the second material B composed of a compound or resin having two or more of a glycidyl group in one molecule are combined in a 0.5 to 2.0 functional group-equivalent ratio, preferably in a 0.5 to 1.5 ratio, of the glycidyl group in the material B to the carboxyl group in the material A. If the functional group-equivalent ratio is less than 0.5, the curing degree of the coating film is too low; if it exceeds 2.0, the curing proceeds too much, and the coating film performance such as flexibility, shocking resistance, ot the like decreases, producing unfavorable results.

The powder coating composition of this invention is specialized by combining, with said base resin and curing agent, a curing catalyst comprising an amine compound in a form of complex α and/or β, i.e. a complex form enveloped in a compound as mentioned below.

Preferred methods to envelope the amine compound in a compound or resin are, for example, a wet type capsule method utilizing a conventional water-solvent or solvent method; a dry system particle surface-improving method by using *"hybridization system"* (which is a surface-improving apparatus system made by Nara Machinery Co., Ltd.); or a resin fine particle formation method -such as formation of acrylic fine particles containing an ethylene-based unsaturated monomer having an amino group, for example, 1-vinylimidazole, etc.

A complex α is obtained by melting and mixing 10 parts by weight of a tertiary amine compound prepared by reacting a secondary amine with an epoxy resin an/or compound with 10 to 200 parts by weight of a resin (b₁-3) having a softening point in the range of from 70 to 180°C selected from the group of polyesters and acrylic resins and then, by cooling the mixture followed by crushing it so it has an average particle diameter in a range of from 1 to 30 µm and a softening point in a range of from 60 to 180°C.

Here, preferable examples of the tertiary amine compound are the undermentioned compounds ③.

③ A reaction product of a compound having one or more of a secondary amino group in one molecule with an epoxy resin and/or compound.

Preferable examples of the compound having one or more of a secondary amino group in one molecule are an aliphatic secondary amine such as dimethylamine, diethylamine, dipropylamine, dibutylamine, dipentylamine, dihexylamine, dimethanolamine, diethanolamine, dipropanolamine, or the like; an aromatic secondary amine such as diphenylamine, phenylmethylamine, phenylethylamine, or the like; an alicyclic secondary amine such as dicyclohexylamine, N-methylpiperazine, or the like; an imidazole-based compound such as imidazole, 2-methylimidazole, 2-ethylimidazole, 2-ethyl-4-methylimidazole, 2-isopropylimidazole, 2-undecylimidazole, 2-phenylimidazole, or the like, and a carboxylic acid salt of the imidazole-based compounds; an imidazoline-based compound such as 2-methylimidazoline, 2-undecylimidazoline, 2-heptadecylimidazoline, or the like; and others.

Preferable examples of the epoxy compound are a monoepoxy compound such as butyl glycidyl ether, hexyl glycidyl ether, phenyl glycidyl ether, allyl glycidyl ether, p-tert-butylphenyl glycidyl ether, ethylene oxide, propylene oxide, p-xylyl glycidyl ether, glycidyl acetate, glycidyl butylate, glycidyl hexoate, glycidyl benzoate, or the like; a reaction product of a divalent phenolic compound represented by bisphenol A type epoxy resin with epichlorohydrine; a reaction product of a divalent alcoholic compound such as ethylene glycol, propylene glycol, polyethylene glycol, polypropylene glycol, 1,4-butanediol, neopentyl glycol, or the like with epichlorohydrine; a reaction product of a dicarboxylic acid such as succinic acid, adipic acid, sebacic acid, phthalic acid, terephthalic acid, hexahydrophthalic acid, or the like with epichlorohydrine; a reaction product of a hydroxycarboxylic acid such as p-hydroxybenzoic acid, β-hydroxynaphtoic acid, or the like with epichlorohydrine;- a diepoxy compound represented by an alicyclic epoxy compound such as 3,4-epoxy-6-methylcyclohexylmethyl 3,4-epoxy-6-methylcyc lohexanecarboxylate, 3,4-epoxycyclohexylmethyl 3,4-epoxycyclohexanecarboxylate, or the like; a polyvalent epoxy compound such as a phenol novolac type epoxy resin, a cresol novolac type epoxy resin, or the like; and so on.

The resin (b₁-3) to be melted and mixed with the tertiary amine compound prepared by reacting a secondary amine with and an epoxy resin and/or compound, has a softening point in a range of from 70 to 180°C, more preferably from 80 to 160°C, is favored. This is because, if the softening point is less than 70°C, the mechanical stability in producing a powder coating composition decreases and excellent storing stability can not be obtained. Also, if the softening point exceeds 180 °C, the flowing character in the baking step is degraded and a sufficient catalytic effect does not emerge.

In a powder coating composition containing a polyester resin as a base resin, which is represented by a carboxyl group-containing polyester resin/epoxy compound-based powder coating composition, use of a polyester resin as the resin (b₁-3) is preferred. A polyester resin of this type can be obtained by using well-known materials and conventional methods. Preferred examples of a usable acid material are, for example, terephthalic acid, isophthalic acid, phthalic acid, methylphthalic acid, trimellitic acid, pyromellitic acid, adipic acid, sebacic acid, succinic acid, maleic acid, fumaric acid, tetrahydrophthalic acid, methy ltetrahydrophthalic acid and hexahydrophthalic acid, and reactive derivatives of these acids such as acid anhydrides, acid halides, acid esters, and the like. In addition, preferred examples of an alcoholic material are ethylene glycol, 1,3-butanediol, 1,4-butanediol, 1,6-hexanediol, diethylene glycol, dipropylene glycol, cyclohexane-1,4-dimethanol, 1,4-cyclohexanediol, neopentyl glycol, isopentyl glycol, bis(hydroxyethyl)terephthalate, hydrogenated bisphenol A, an addition compound of hydrogenated bisphenol A with an alkylene oxide, trimethylolethane, trimethylolpropane, glycerol, pentaerythritol, and the like.

In addition, if necessary, a reactive polyfunctional compound, fats and oils, a fatty acid, or the like may be jointly used as materials for the polyester resin. A preferable example of the reactive polyfunctional compound is a compound having an acid group and a hydroxyl group in one molecule such as hydroxypivalic acid, hydroxybenzoic acid, or the like. The fats and oils can be introduced by an ester-exchange reaction etc. and the fatty acid by a dehydration reaction or the like.

In producing the polyester resin, when a mesogenic group-containing a compound represented by the forementioned formula (1) or (2) is used as the acid material and a mesogenic group-containing compound represented by the forementioned formula (3), (4), or (5) is used as an alcoholic material, an obtained polyester resin shows a thermotropic liquid crystal character with specially superior curing property and storing stability. This is because, at ordinary temperature, orientation of the mesogenic group results in superior stability. Also, when melted, an excellent flowing character is exhibited due to a viscosity decrease resulting from the liquid crystal character thereby producing an excellent catalytic effect.

In the powder coating comprising an acrylic resin as a base resin, an example of a preferred acrylic resin is resin (b₁-3). An acrylic resin of this kind is obtained using conventional methods and well-known materials. In this case, when a compound represented by the following formula (7) is used as a monomer component, acrylic resin showing a thermotropic liquid crystal character is obtained with an uncommonly superior curing property and storing stability. As did the case of forementioned mesogenic group-containing polyester resin, ordinary temperature causes the orientation of the mesogenic group which results in superior stability and, under a melted condition, excellent flowing character is exhibited due to decreased viscosity resulting from the liquid crystal character producing excellent catalytic effect.

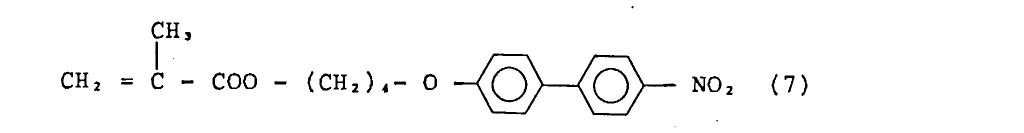

The complex α used as the curing catalyst in the present invention is obtained by melting and mixing the resin (b₁-3) in a ratio of from 10 to 200 parts by weight with 10 parts by weight of the tertiary amine compound prepared by reacting a secondary amine with an epoxy resin and/or compound. If the ratio is less than 10 parts by weight, a covering effect of the amine compound is insufficient resulting in an inferior storing stability. On the other hand, if it exceeds 200 parts by weight, the amine compound becomes, in a baking step, sluggish in flowing out from the catalysis system resulting in a degraded catalytic effect. Although the complex α can be produced by melting and mixing by a conventional method such as a kneader method, a roll mill method, or the like, it is essential to have an average particle diameter after crushing in a range of from 1 to 30 µm, more preferably from 1 to to 20 µm, and to have a softening point in a range of from 60 to 180 °C, more preferably from 70 to 140°C. The reason for this is that the limit of crushing by a mechanical means is a 1 µm average particle diameter and, if the diameter exceeds 30 µ m, a dispersing property of the catalyst in powder particles drops, and the outside appearance and physical properties are degraded. If the softening point is lower than 60 °C, the mechanical stability in producing a powder coating composition is degraded, and superior storing stability is not obtained. If it exceeds 180°C, the quality of flowing character in the baking step becomes degraded producing an insufficient catalytic effect.

A complex β includes as a core a powder of a tertiary amine compound prepared by reacting a secondary amine with an epoxy resin and/or compound, and as a capsule, the reaction product between said tertiary amine compound and an epoxy resin and/or compound and an isocyanate compound.

Here, preferred examples of the powder of a tertiary amine compound are the forementioned compounds ③.

The complex β used in the present invention is, as mentioned before, characterized in that said powder of a tertiary amine compound is included as a core and that a reaction product of said tertiary amine compound and an epoxy resin and/or compound and an isocyanate compound is included as a capsule. The average particle diameter is not specifically limited, but should not exceed 50 µm, and its preferable range is from 1 to 20 µm. The reason for this is that an average particle diameter of the powder coating commonly used is about 40 µm and the maximum particle diameter of that is about 100 µm.

The complex α and β, which are used in the present invention as the curing catalyst, may be jointly used.

In this invention, the curing catalyst is combined in a ratio of from 0.05 to 3.0 % by weight, more preferably in a ratio of from 0.1 to 1.5 % by weight, when converted into said tertiary amine compound in the curing catalyst composition, to a total amount of the components A) and B) Regarding the complexes α and β, the tertiary amine compound in the curing catalyst composition is a tertiary amine compound prepared by reacting a secondary amine with an epoxy resin and/or compound.

If the ratio is less than 0.05 % by weight, the curing property is inferior and, if it exceeds 3.0 % by weight, the storing stability is inferior and the curing proceeds too quickly in the baking step thereby degrading outside appearance.

The powder coating composition of this invention is characterized in that the above-described base resin and curing agent are main components and that the forementioned curing catalyst is combined to these. However, in case of need, various additives for powder coating such as the undermentioned ④ to ⑧ or the like may be added.

④ To prevent a crater in the coating film and to elevate smoothness, a surface conditioner such as acrylic acid long chain alkyl esters, polysiloxane, or the like may be added.

⑤ A coloring pigment, for example, an inorganic pigment such as titanium dioxide, iron oxide red, yellow iron oxide, etc. and an organic pigment such as carbon black, phthalocyanine blue, phthalocyanine green, a quinacridone-based red pigment, etc.

⑥ A plasticizer such as a polyalkylenepolyol, a phthalic acid ester, etc.

⑦ A UV absorbent and an antioxidant.

⑧ An anti-pinhole agent such as benzoin etc.

To prepare a powder coating composition Of the present invention, no special method is required. It may be prepared by premixing materials followed by melting and mixing them at about 100°C , then cooling the mixture followed by carrying out conventional processes such as crushing, sieve classifying, etc. It is possible to coat a thus-obtained powder coating composition by any of an electrostatic spraying method, a flowing immersion method or a well-known conventional method.

When a carboxylic acid group is contained in the main component and a curing catalyst including an amine compound is used, the powder coating composition has superior curing property making low temperature-baking and short time-baking possible. Also, when the amine compound is enveloped in a compound and/or resin, the amine compound exists in the enveloping compound and/or resin in storage improving storing stability in the powder coating composition as well as improving outside appearance and quality of the coating film.

In the powder coating composition relating to the present invention, a curing catalyst effect does not emerge until almost up to a melting temperature of the compound and/or resin which envelopes the curing catalyst. Accordingly, at a normal temperature, the catalytic effect does not emerge and no curing reaction in the interior of powder particles occurs. That is, the powder coating composition relating to the present invention has superior storing stability. In addition, during baking, the curing catalyst melts to mix together with the enveloping compound and/or resin and sufficiently to exhibit a catalytic effect and, as a result, the curing property is very much elevated and executing of the baking at a low temperature becomes possible. Since the main component in the powder coating composition of present invention contains a carboxyl group, the flowing character of the coating during film-formation and the smoothness and physical properties of a coated film are excellent providing a coating film with an excellent outside appearance and high quality.

Since the powder coating composition relating to the present invention has excellent properties as forementioned, it is possible to apply it for various kinds of base materials including household electrical appliances, office supplies, etc.

The above, and other objects, features and advantages of the present invention will become apparent from the following description.

### DESCRIPTION OF THE PREFERRED EMBODIMENTS

The amine compounds, complex α, and complex β were prepared as follows.

### - Preparation of amine compounds -

### Amine compound (I)

A mixture of 154 g of 2-isopropylimidazole and 380 g of bisphenol A type epoxy resin (trade name: YD-128, made by Tohto Kasei K.K.) were allowed to react at 80°C for 2 hours in 600 ml of toluene. Then, the reaction mixture was dried under a reduced pressure and subjected to jet crushing to obtain an amine compound having an average particle diameter of 3 µm (I).

### Amine compound (II)

A mixture of 56 g of diethylamine and 500 g of bisphenol A type epoxy resin (trade name: YD-012, made by Tohto Kasei K.K.) were allowed to react at 80 °C for 2 hours in 600 ml of toluene. Then, the obtained reaction mixture was dried under a reduced pressure and subjected to jet crushing to obtain an amine compound having an average particle diameter of 4 µm (II).

### - Preparation of complex α -

### § 1: Complex (α-1)

Using 8 moles of dimethyl 4,4'-diphenylcarboxylate, 2 moles of dimethyl terephthalate, and 11 moles of 1,9-nonanediol, an ester exchange reaction was carried out under the presence of dibutyltin oxide to obtain a polyester resin.

This polyester resin, 70 g, and 30 g of the above-obtained amine compound (I) were melted and kneaded by a kneader warmed at 140 °C . Then, the kneaded mixture was cooled and subjected to jet crushing to obtain a complex having an average particle diameter 7 µm (α-1).

### § 2: Complex (α-2)

A mixture of 40 parts by weight of methyl methacrylate, 30 parts by weight of styrene, and 30 parts by weight of a biphenyl group-containing acrylic monomer denoted by the forementioned formula (7) was allowed to copolymerize in xylene. Then, the reaction mixture was dried under a reduced pressure to obtain an acrylic resin.

This acrylic resin, 70 g, was melted and kneaded with 30 g of the amine compound (I), which was obtained as described above, using a kneader warmed at 120 °C , and a thus-obtained mixture was cooled and subjected to jet crushing to obtain a complex having an average particle diameter of 5 µm (α-2).

### § 3: Complex (α-3)

A copolymerization reaction was carried out in xylene with 70 parts by weight of methyl methacrylate and 30 parts by weight of styrene, and a reaction mixture was dried under a reduced pressure to obtain an acrylic resin. This acrylic resin, 70 parts by weight, was melted and kneaded with 30 parts by weight of the amine compound (I), obtained as described above using a kneader warmed at 120 °C . A thus-obtained mixture was cooled and subjected to jet crushing to obtain a complex having an average particle diameter of 5 µm (α-3).

### - Preparation of complex β -

### § 1: Complex (β-1)

In a flask were mixed 400 g of a bisphenol A type epoxy resin (said YD-128), 200 g of the amine compound (I), obtained as described above, and 5 g of water. To this mixture, 23 g of isophorone diisocyanate were added to carry out a reaction at 50°C for 3 hours, whereby a complex (β-1) was obtained.

### § 2: Complex (β-2)

In a flask were mixed 400 g of a bisphenol A type epoxy resin (said YD-128), 200 g of the amine compound (II), obtained as described above, and 5 g of water. To this mixture, 23 g of isophorone diisocyanate were added to carry out a reaction at 50 °C for 3 hours, whereby a complex (β -2) was obtained.

### - Example 1 -

The carboxyl group-containing polyester resin, 100 parts (parts by weight, hereinafter the same)(P 7307.3, number average molecular weight Mn = 4800, acid value AV = 34, glass transition temperature Tg = 63 °C , made by EMS-JAPAN Corporation) were premixed with 7.5 parts of triglycidyl isocyanurate (TGIC), 0.63 parts of the complex (α-1), 60 parts of titanium oxide (trade name: CR-50; pigment, made by Ishihara Sangyo K.K.), 1.1 parts of benzoin (anti-pinhole agent), and 0.4 parts of silicone (trade name: YF-3919; surface-conditioner, made by Toshiba Silicon K.K.) as shown in Table 1. The obtained premixture was melted and kneaded in a kneader warmed at 100°C , cooled, crushed, and passed through a 150 mesh sieve, whereby a powder coating composition was obtained.

This powder coating composition was coated in a 40 µm thickness by an electrostatic spray coating method on a plate of 0.6 mm thickness which had been treated with zinc phosphate, and baked at 160°C for 15 minutes to obtain a coated plate.

### - Example 2 -

The procedure of example 1 was repeated except that, as shown in Table 1, 0.60 parts of the complex (β-1) were used instead of 0.63 parts of the complex (α-1) in the powder coating composition, whereby a powder coating composition and a coated plate were prepared.

### - Example 3 -

The procedure of example 1 was repeated except that, as shown in Table 1, 1.14 parts of the complex (β-2) were used instead of 0.63 parts of the complex (α-1) in the powder coating composition, whereby a powder coating composition and a coated plate were prepared.

### - Example 4 -

A glycidyl compound X-1, 18.5 parts (epoxy equivalent = 272 g/eq), prepared by carrying out a reaction of a dicarboxylic acid (which is a polyester oligomer obtained from a reaction of 1 mole of ethylene glycol and 2 moles of hexahydrophthalic anhydride) with 2 moles of triglycidyl isocyanurate (TGIC) were premixed with 100 parts of a carboxyl group-containing polyester resin (said P 7307.3), 0. 63 parts of the complex (α-1), 66 parts of titanium oxide (said CR-50), 1.1 parts of benzoin, and 0.4 parts of silicone (said YF-3919) as shown in Table 1. The obtained premixture was melted and kneaded in a kneader warmed at 100 °C , cooled, crushed, and passed through a 150 mesh sieve, whereby a powder coating composition was obtained.

This powder coating composition was coated in a 40 µm thickness by an electrostatic spray coating method on a plate of 0.6 mm thickness which had been treated with zinc phosphate, and baked at 160°C for 15 minutes to obtain a coated plate.

### - Example 5 -

The procedure of example 4 was repeated except that, as shown in Table 1, 0.60 parts of the complex (β-1) were used instead of 0.63 parts of the complex (α-1) in the powder coating composition, whereby a powder coating composition and a coated plate were prepared.

### - Example 6 -

A carboxyl group-containing acrylic resin Y, 100 parts (Mn = 2800, AV = 75, Tg = 65°C ), which were prepared by a copolymerization reaction of 11.51 parts of methacrylic acid, 25 parts of styrene, 30.68 parts of methyl methacrylate, 2.80 parts of 2-hydroxyethyl methacrylate₁ and 30.01 parts of 2-ethylhexyl methacrylate, were premixed with 11.3 parts of triglycidyl isocyanurate (TGIC), 0.63 parts of the complex (α-2), 42 parts of titanium oxide (said CR-50), 0.5 parts of benzoin, and 0.7 parts of silicone (said YF-3919) as shown in Table 1. The obtained premixture was melted and kneaded in a kneader warmed at 100°C , cooled, crushed, and passed through a 150 mesh sieve, whereby a powder coating composition was obtained.

This powder coating composition was coated in a 40 µm thickness by an electrostatic spray coating method on a plate of 0.6 mm thickness which had been treated with zinc phosphate, and baked at 160°C for 15 minutes to obtain a coated plate.

### - Example 7 -

The procedure of example 6 was repeated except that, as shown in Table 1, 0.60 parts of the complex (β-1) were used instead of 0.63 parts of the complex (α-2) in the powder coating composition, whereby a powder coating composition and a coated plate were prepared.

### - Example 8 -

A glycidyl group-containing acrylic resin Z, 100 parts (Mn = 2800, Tg = 65 °C ), which were obtained by a copolymerization of 30 parts of glycidyl methacrylate, 25 parts of styrene, 32.7 parts of methyl methacrylate, 6.7 parts of n-butyl methacrylate, and 5.6 parts of 2-ethylhexyl methacrylate, were premixed with 15.9 parts of decanedicarboxylic acid (DDA), 0.63 parts of the complex ( α-2), 44 parts of titanium oxide (said CR-50), 0.5 parts of benzoin, and 0.7 parts of silicone (said YF-3919) as shown in Table 1 The obtained premixture was melted and kneaded in a kneader warmed at 100°C , cooled, crushed, and passed through a 150 mesh sieve, whereby a powder coating composition was obtained.

This powder coating composition was coated in a 40 µm thickness by an electrostatic spray coating method on a plate of 0.6 mm thickness which had been treated with zinc phosphate, and baked at 160°C for 15 minutes to obtain a coated plate.

### - Example 9 -

The procedure of example 8 was repeated except that, as shown in Table 1, 0.63 parts of the complex (α-3) were used instead of 0.63 parts of the complex (α-2) in the powder coating composition, whereby a powder coating composition and a coated plate were prepared.

### - Example 10 -

The procedure of example 8 was repeated except that, as shown in Table 1, 0.60 parts of the complex (β-1) were used instead of 0.63 parts of the complex (α-2) in the powder coating composition, whereby a powder coating composition and a coated plate were prepared.

### - Comparative example 1 -

The procedure of example 1 was repeated except that, as shown in Table 2, the complex (α-1) was not used at all, whereby a powder coating composition and a coated plate were prepared.

### - Comparative example 2 -

The procedure of example 1 was repeated except that, as shown in Table 2, 0.19 parts of the amine compound (I) were used instead of 0.63 parts of the complex (α-1) in the powder coating composition, whereby a powder coating composition and a coated plate were prepared.

### - Comparative example 3 -

The procedure of example 1 was repeated except that, as shown in Table 2, 0.36 parts of the amine compound (II) were used instead of 0.63 parts of the complex (α-1) in the powder coating composition, whereby a powder coating composition and a coated plate were prepared.

### - Comparative example 4 -

The procedure of example 4 was repeated except that, as shown in Table 2, 0.19 parts of the amine compound (I) were used instead of 0.63 parts of the complex (α-1) in the powder coating composition, whereby a powder coating composition and a coated plate were prepared.

### - Comparative example 5 -

The procedure of example 6 was repeated except that, as shown in Table 2, 0.19 parts of the amine compound (I) were used instead of 0.63 parts of the complex (α-2) in the powder coating composition, whereby a powder coating composition and a coated plate were prepared.

### - Comparative example 6 -

The procedure of example 8 was repeated except that, as shown in Table 2, 0.19 parts of the amine compound (I) were used instead of 0.63 parts of the complex (α-2) in the powder coating composition, whereby a powder coating composition and a coated plate were prepared.

### - Comparative example 7 -

The procedure of example 8 was repeated except that, as shown in Table 2, 11.3 parts of hexahydrophthalic anhydride were used instead of 15.9 parts of decanedicarboxylic acid in the powder coating composition and that 0.60 parts of the complex (β-1) were used instead of 0.63 parts of the complex (α-2), whereby a powder coating composition and a coated plate were prepared.

### - Comparative example 8 -

The procedure of example 8 was repeated except that, as shown in Table 2, 7.5 parts of dicyandiamide (DICY) were used instead of 15.9 parts of decanedicarboxylic acid in the powder coating composition and that 0.60 parts of the complex (β-1) were used instead of 0.63 parts of the complex (α-2), whereby a powder coating composition and a coated plate were prepared.

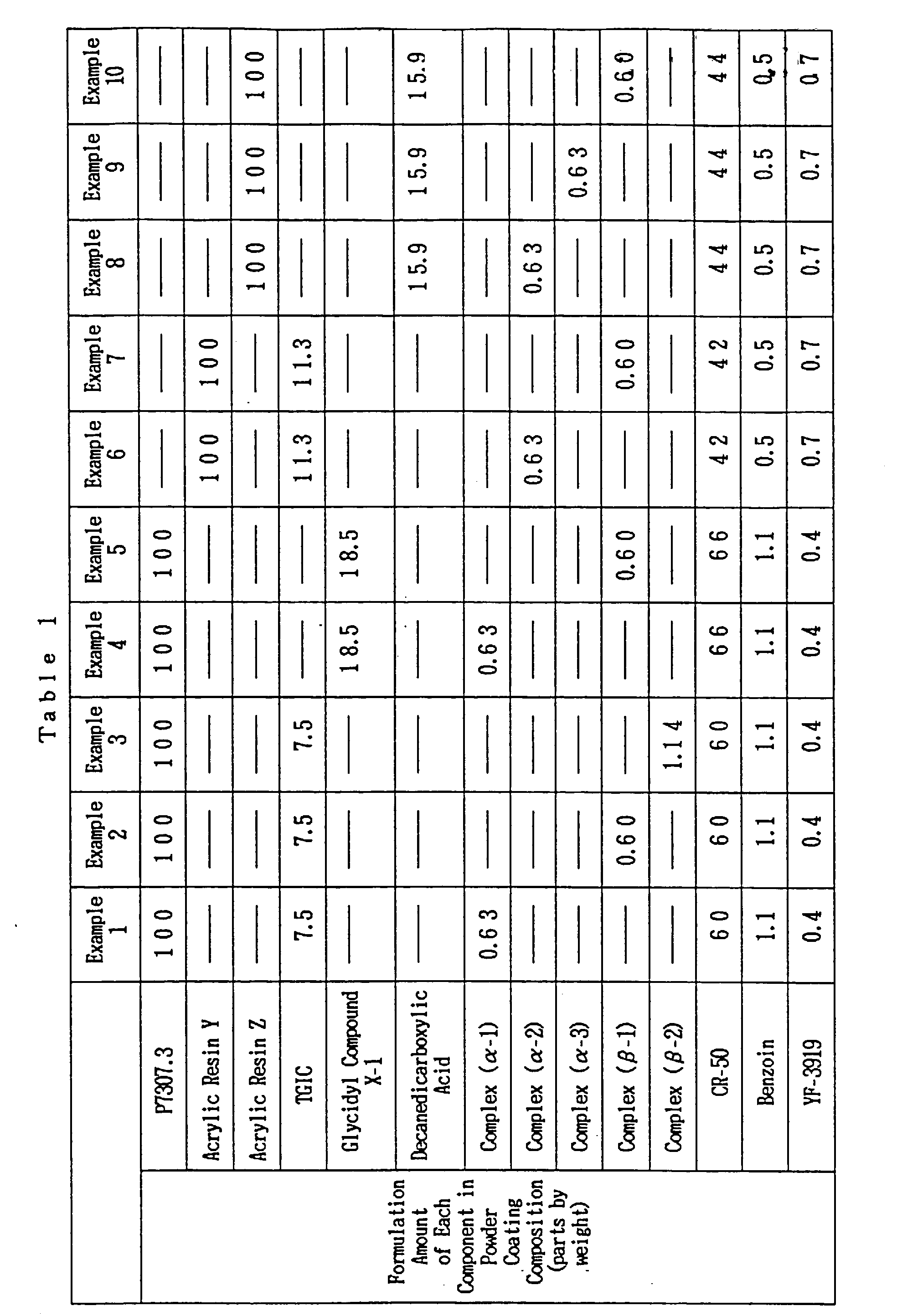

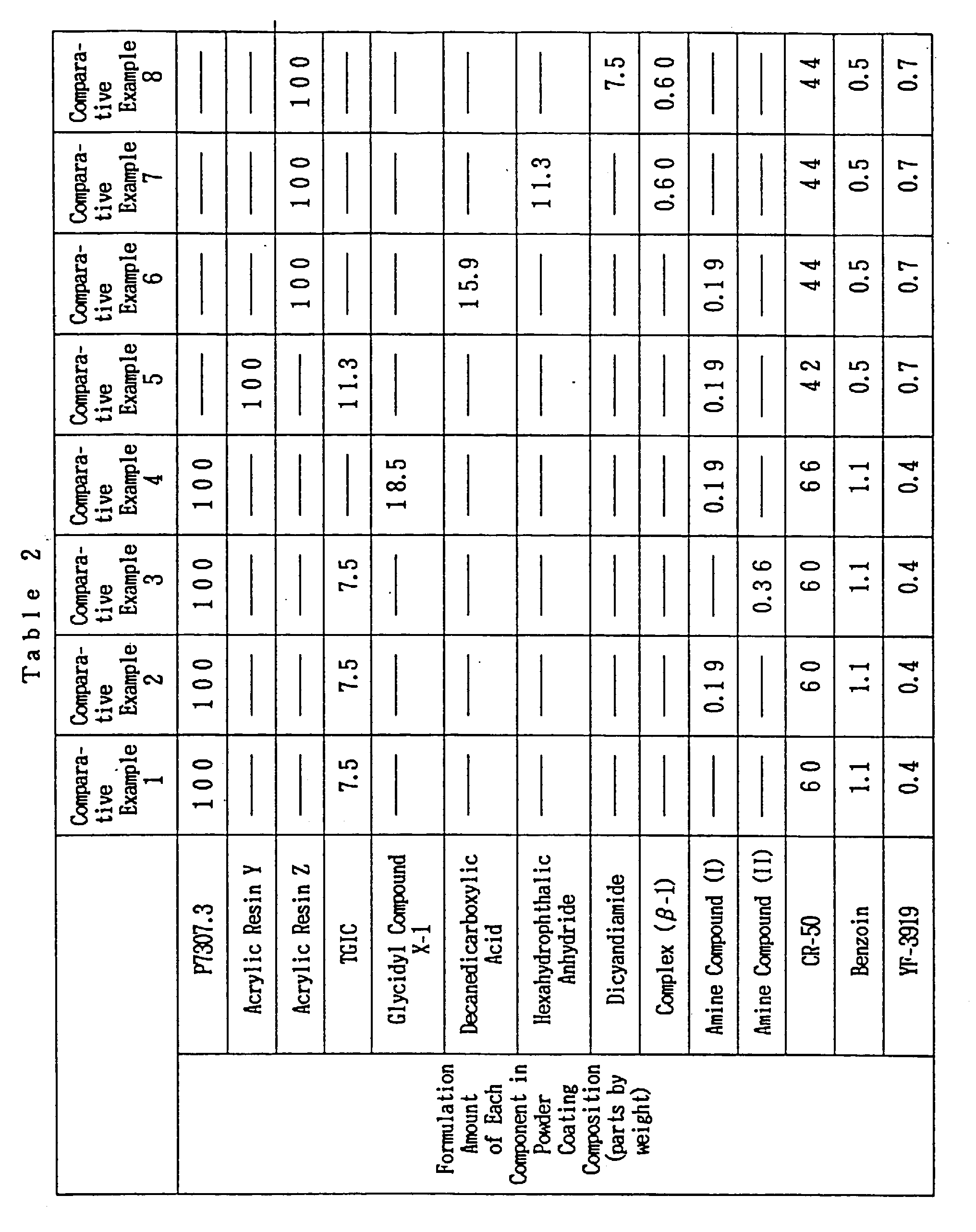

For the coated plates obtained from the examples 1 to 10 and the comparative examples 1 to 8, the outside appearance, storing stability, and curing degree (solvent resistance) were evaluated according to the following tests, and results obtained are presented in Table 3 and Table 4.

### Outside appearance test

The smoothness and gloss (60° ) of a coating film were evaluated. The smoothness was evaluated by the average coarseness of a center line (Ra). Here, Ra is measured by examining the conditions of 5 mm of CUTOFF and 25 mm of TRAVERSING LENGTH. A decrease in Ra reflects an improval smoothness.

### Storing stability test

An outside appearance test (for smoothness and gloss as described above) was carried out with a coated plate obtained by using a powder coating composition stored for 2 months at 35°C in a constant temperature room after being produced. The storing stability was evaluated by detecting difference between the outside appearance tested before storage and tested after storage.

### Curing degree (solvent resistance) test

This test was carried out using a xylene-rating test. A good result was shown by a circle ○ and a bad result by a cross ×.

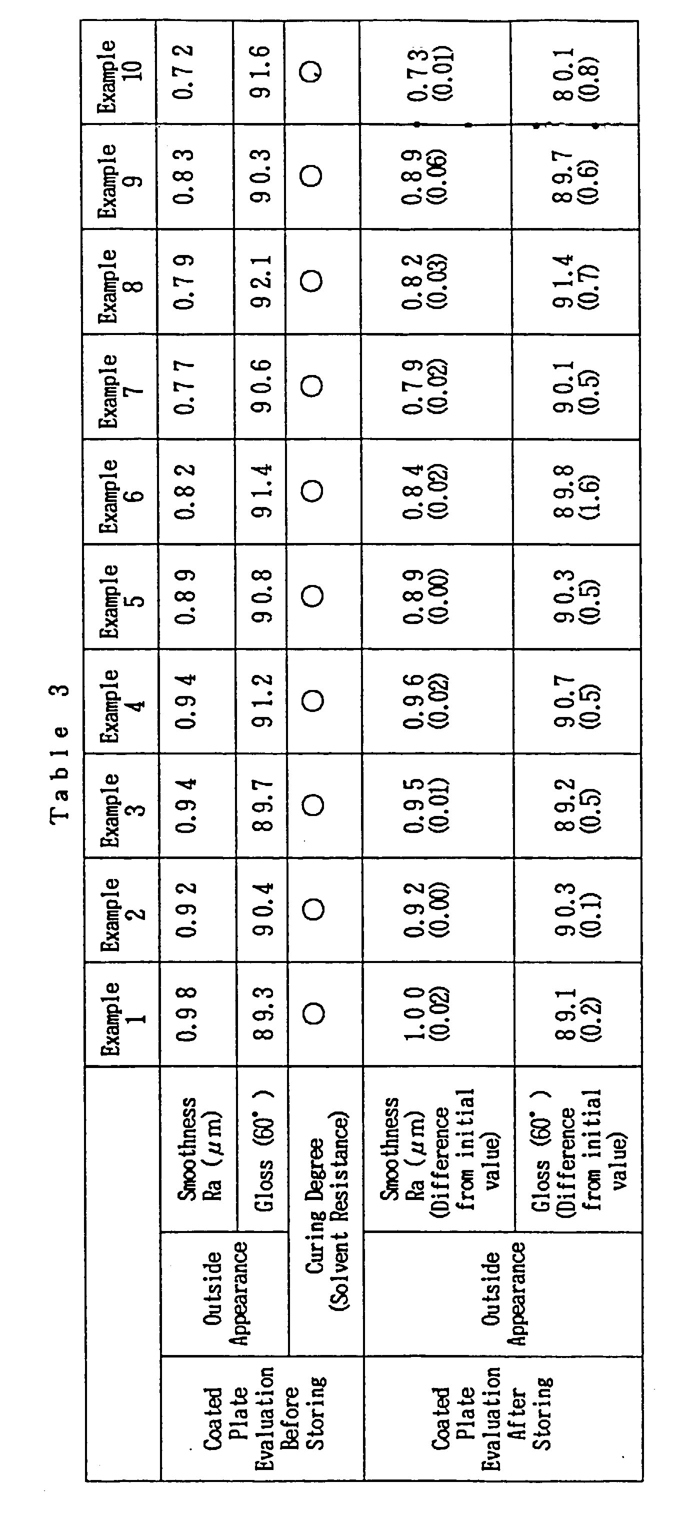

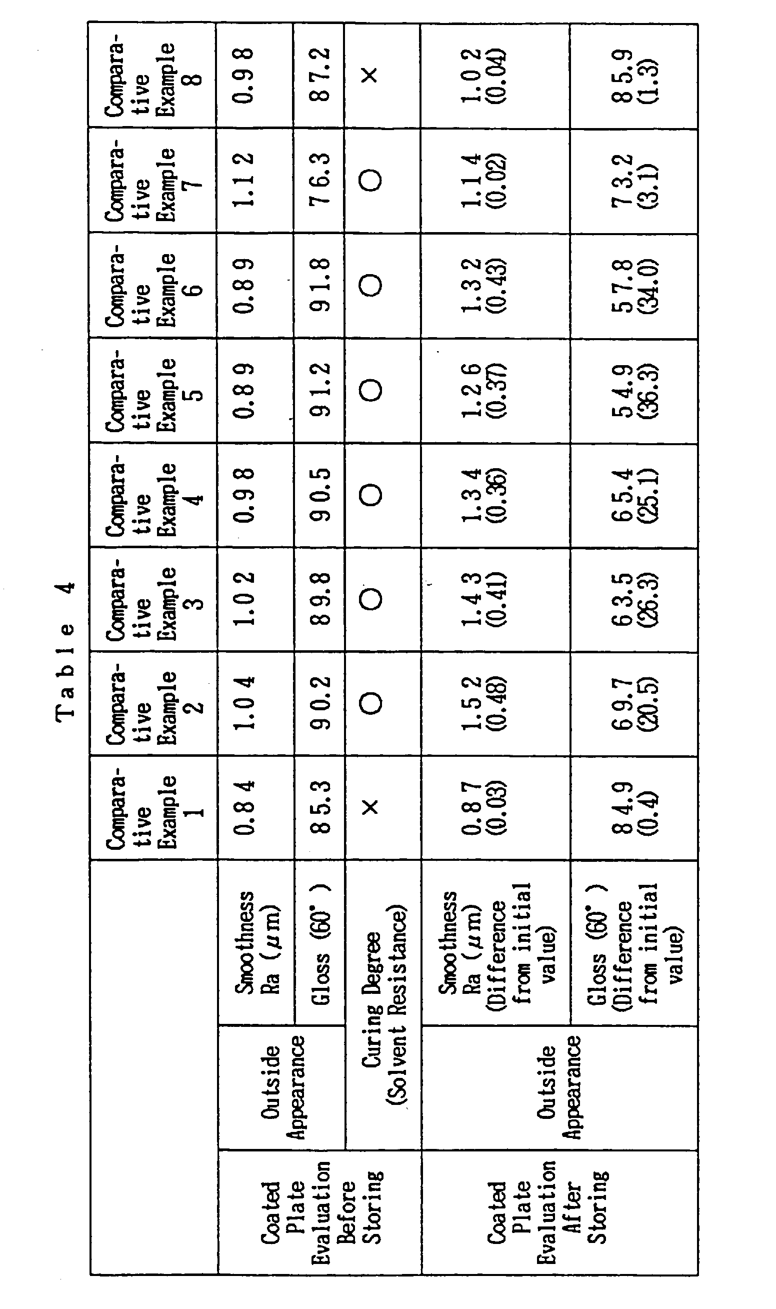

Having described preferred embodiments of the invention, it is to be understood that the invention is not limited to those precise embodiments, and that various changes and modifications may be effected therein by one skilled in the art without departing from the scope or spirit of the invention as defined in the appended claims.

## Claims

1. A powder coating composition comprising
A) a compound or resin containing two or more carboxyl groups in one molecule
B) a compound or resin with two or more glycidyl groups in one molecule wherein the functional group-equivalent ratio of glycidyl to carboxyl groups is in a range of from 0.5 to 2.0 and
C) a curing catalyst in the form of a complex α and/or β
**wherein**
the curing catalyst is obtained
1) by melting and mixing 10 parts by weight of a tertiary amine compound prepared by reacting a secondary amine with an epoxy resin and/or compound with 10 to 200 parts by weight of a resin having a softening point in the range of from 70 to 180°C selected from the group of polyesters and acrylic resins and then by cooling the mixture followed by crushing the cooled mixture so as to have an average particle diameter in the range of from 1 to 30 µm and a softening point within a temperature range of from 60 to 180°C (complex α) or
2) by encapsulating a core consisting of a powder of a tertiary amine compound prepared by reacting a secondary amine with an epoxy resin and/or compound with an encapsulating material being the reaction product between said tertiary amine compound and an epoxy resin and/or compound and an isocyanate compound (complex β)
and
**wherein**
the ratio of said tertiary amine compound in said curing catalyst to the total weight of components A) and B) is from 0.05 to 3.0 % by weight.

2. A powder coating composition according to claim 1, wherein the compound or resin containing two or more of a carboxyl group in one molecule is a polyester resin.

3. A powder coating composition according to claim 1, wherein the compound or resin containing two or more of a carboxyl group in one molecule is an acrylic resin.

4. A powder coating composition according to claim 1, wherein the compound or resin containing two or more of a glycidyl group in one molecule is an acrylic resin.

5. A powder coating composition according to claim 1, wherein the compound or resin containing two or more of a glycidyl group in one molecule is a polyglycidyl compound containing two to six of a glycidyl group in one molecule on the average, said polyglycidyl compound obtained by adding triglycidyl isocyanurate to a polyester oligomer having two or more of a carboxyl group in one molecule.

## Patentansprüche

1. Pulverbeschichtungsmasse, umfassend:
(a) eine Verbindung oder ein Harz mit zwei oder mehr Carboxylgruppen in einem Molekül;
(b) eine Verbindung oder ein Harz mit zwei oder mehr Glycidylgruppen in einem Molekül, wobei das Funktionsgruppenäquivalentverhältnis Glycidyl-/Carboxylgruppen im Bereich von 0,5 bis 2,0 liegt, und
(c) einen Härtungskatalysator in Form eines Komplexes α und/oder β,
wobei der Härtungskatalysator durch
(1) Aufschmelzen und Vermischen von 10 Gew.-Teilen einer tertiären Aminverbindung, hergestellt durch Umsetzen eines sekundären Amins mit einem (einer) Epoxyharz und/oder -verbindung mit 10 - 200 Gew.-Teilen eines Harzes eines Erweichungspunkts im Bereich von 70 - 180°C, ausgewählt aus der Gruppe Polyester und Acrylharze, und anschließendes Kühlen des Gemischs, gefolgt von einem Zerkleinern des abgekühlten Gemischs zur Gewährleistung eines durchschnittlichen Teilchendurchmessers im Bereich von 1 - 30 µm und eines Erweichungspunkts innerhalb eines Temperaturbereichs von 60 - 180°C (Komplex α), oder
(2) durch Einkapseln eines Kerns, bestehend aus einem Pulver einer tertiären Aminverbindung, hergestellt durch Umsetzen des sekundären Amins mit einem (einer) Epoxyharz und/oder -verbindung mit einem Einkapselungsmaterial in Form des Reaktionsprodukts der tertiären Aminverbindung mit einem (einer) Epoxyharz und/oder -verbindung und einer Isocyanatverbindung (Komplex β),
erhalten wurde und wobei das Verhältnis tertiäre Aminverbindung in dem Härtungskatalysator/Gesamtgewicht der Komponenten A) und B) 0,05 - 3,0 Gew.-% beträgt.

2. Pulverbeschichtungsmasse nach Anspruch 1, wobei die Verbindung oder das Harz mit zwei oder mehr Carboxylgruppen in einem Molekül aus einem Polyesterharz besteht.

3. Pulverbeschichtungsmasse nach Anspruch 1, wobei die Verbindung oder das Harz mit zwei oder mehr Carboxylgruppen in einem Molekül aus einem Acrylharz besteht.

4. Pulverbeschichtungsmasse nach Anspruch 1, wobei die Verbindung oder das Harz mit zwei oder mehr Glycidylgruppen in einem Molekül aus einem Acrylharz besteht.

5. Pulverbeschichtungsmasse nach Anspruch 1, wobei die Verbindung oder das Harz mit zwei oder mehr Glycidylgruppen in einem Molekül aus einer Polyglycidylverbindung mit durchschnittlich 2 bis 6 Glycidylgruppen in einem Molekül besteht und die Polyglycidylverbindung durch Addition von Triglycidylisocyanurat an ein Polyesteroligomer mit zwei oder mehr Carboxylgruppen in einem Molekül erhalten wurde.

## Revendications

1. Composition de revêtement en poudre comprenant :
A) un composé ou résine contenant deux groupes carboxyle ou davantage dans une molécule
B) un composé ou résine avec deux groupes glycidyle ou davantage dans une molécule où le rapport des équivalents-groupes fonctionnels glycidyle sur les équivalents-groupes fonctionnels carboxyle se trouve dans la plage allant de 0,5 à 2,0 et
C) un agent de durcissement sous la forme d'un complexe α et/ou β, où le catalyseur de durcissement est obtenu :
1) en fondant et en mélangeant 10 parties en poids d'un composé amine tertiaire préparé en faisant réagir une amine secondaire avec une résine et/ou un composé époxyde avec 10 à 200 parties en poids d'une résine ayant un point de ramollissement dans la plage allant de 70 à 180°C choisie dans le groupe des polyesters et des résines acryliques. et ensuite en refroidissant le mélange et en broyant le mélange refroidi de manière à avoir une granulométrie moyenne (diamètre) dans la plage allant de 1 à 30 mµ et un point de ramollissement dans la plage de températures allant de 60 à 180°C (complexe α) ou
2) en encapsulant un noyau constitué d'une poudre d'un composé amine tertiaire préparé en faisant réagir une amine secondaire avec une résine et/ou un composé époxyde avec un composé d'encapsulation qui est le produit de réaction entre ledit composé amine tertiaire, une résine et/ou un composé époxyde et un composé isocyanate (complexe β)
et
où
le rapport dudit composé amine tertiaire dans ledit catalyseur de durcissement sur le poids total des composé A) et B) représente de 0,05% à 3,0% en poids.

2. Composition de revêtement en poudre selon la revendication 1, où le composé ou résine contenant deux groupes carboxyle ou davantage dans une molécule est une résine polyester.

3. Composition de revêtement en poudre selon la revendication 1, où le composé ou résine contenant deux groupes carboxyle ou davantage dans une molécule est une résine acrylique.

4. Composition de revêtement en poudre selon la revendication 1, où le composé ou résine contenant deux groupe glycidyle ou davantage dans une molécule est une résine acrylique.

5. Composition de revêtement en poudre selon la revendication 1, où le composé ou résine contenant deux groupes glycidyle ou davantage dans une molécule est un composé polyglycidyle contenant en moyenne deux à six groupes glycidyle dans une molécule, ledit composé polyglycidyle étant obtenu en ajoutant du triglycidyle isocyanurate à un polyester oligomère ayant deux groupes carboxyle ou davantage dans une molécule.
